# FASCICULE DE BREVET EUROPEEN

(11) **EP 2 577 390 B1**
(45) Date de publication et mention de la délivrance du brevet: **28.01.2015**
(21) Numéro de dépôt: 11726886.2
(22) Date de dépôt: 19.05.2011
(51) Int. Cl.: G02F 1/15

(54) **PROCEDE DE FABRICATION D'UN ARTICLE ELECTROCHROME**
VERFAHREN ZUR HERSTELLUNG EINES ELEKTROCHROMEN ARTIKELS
METHOD OF MANUFACTURING AN ELECTROCHROMIC ARTICLE

(30) Priorité: 27.05.2010 FR 1054070
(43) Date de publication de la demande: 10.04.2013
(73) Titulaire: Essilor International (Compagnie Générale d'Optique), 94220 Charenton-le-Pont (FR)
(72) Inventeur: DULUARD, Sandrine, F-94220 Charenton Le Pont (FR)
(74) Mandataire: Cabinet Plasseraud
(86) Numéro de dépôt international: PCT/FR2011/051135
(87) Numéro de publication internationale: WO 2011/148081

(56) Documents cités:
- WO-A2-2009/156692
- US-A- 4 938 571
- HO K-C: "Cycling and at-rest stabilities of a complementary electrochromic device based on tungsten oxide and Prussian blue thin films", ELECTROCHIMICA ACTA, ELSEVIER SCIENCE PUBLISHERS, BARKING, GB, vol. 44, no. 18, 1 mai 1999 (1999-05-01), pages 3227-3235, XP004167166, ISSN: 0013-4686, DOI: DOI:10.1016/S0013-4686(99)00041-9

## Description

La présente invention concerne un procédé de fabrication d'un article électrochrome, comprenant une étape de réduction ou d'oxydation non-électrolytique d'un revêtement électrochrome.

Les travaux ayant abouti à la présente demande ont reçu des fonds du Septième Programme-Cadre de la Commission Européenne sous la Convention de subvention n° INNOSHADE-200431-NMP LARGE.

Les vitrages électrochromes ont typiquement une structure comportant deux couches extérieures transparentes, par exemple deux plaques de verre organique ou minéral, deux couches électroconductrices déposées sur les faces internes des couches extérieures et reliées à une alimentation électrique, et un électrolyte disposé entre les deux couches électroconductrices, au centre dudit dispositif.

Une couche électrochrome étant prévue entre l'électrolyte et au moins une des couches électroconductrices, de préférence entre l'électrolyte et les deux couches électroconductrices. Les colorants électrochromes des deux couches électrochromes sont alors choisis de manière à ce que l'un d'eux soit coloré à l'état réduit et incolore ou faiblement coloré à l'état oxydé, tandis que l'autre est coloré à l'état oxydé et incolore ou faiblement coloré à l'état réduit.

Dans un tel dispositif électrochrome contenant deux substances électrochromes, l'une des deux sera à l'état oxydé quand l'autre sera à l'état réduit et inversement. Il est donc nécessaire qu'avant assemblage des différents éléments, une des deux couches électrochromes soit sous forme réduite et l'autre sous forme oxydée.

Le dépôt d'une fine couche d'au moins un composé électrochrome sur un substrat électroconducteur se fait par exemple par électrodéposition ou par voie non-électrolytique selon des techniques connues.

Or, la plupart des revêtements électrochromes déposés ainsi sous forme de couche mince sont à l'état oxydé et doivent par conséquent subir une réduction avant intégration dans un dispositif électrochrome tel que décrit ci-dessus.

Une telle réduction se fait typiquement
- soit par immersion dans une solution d'un agent réducteur qui souffre cependant d'une très faible stabilité au stockage et nécessite une étape supplémentaire de rinçage du film pour éliminer l'agent réducteur résiduel,
- soit dans une cellule électrochimique : la couche électroconductrice portant le revêtement de composé électrochrome à réduire est connectée à une première électrode (électrode de travail) et l'ensemble est immergé dans un bain d'électrolyte dans lequel est également plongée une contre-électrode, généralement une contre-électrode sacrificielle contenant un agent réducteur du composé électrochrome et éventuellement une électrode de référence.

Des procédés de réduction sont connus du document US 49 38 571.

Un tel système électrochimique à deux ou trois électrodes est relativement complexe et nécessite une adaptation de la géométrie des différents composants, notamment des dimensions du bain, à la taille de la pièce à traiter. Il est souvent inapproprié lorsque l'étendue des surfaces à réduire devient très grande, comme c'est le cas par exemple pour des vitres électrochromes, ou lorsque ces surfaces sont courbes. Il ne convient pas non plus très bien pour des procédés de réduction en continu.

Par ailleurs avec un tel système électrochimique il est difficile d'obtenir, au-delà d'une certaine étendue du revêtement à réduire, une réduction homogène sur l'ensemble de la surface.

Le but de la présente invention a été de proposer un procédé de réduction de revêtements de composés électrochromes, déposés sur des substrats électroconducteurs (appelés ci-après indifféremment substrats conducteurs, couches électroconductrices ou couches conductrices), qui permettrait à la fois de s'affranchir des problèmes d'adaptation des dimensions de l'appareillage électrochimique à la taille de l'objet à réduire et de permettre l'obtention de revêtements électrochromes réduits de façon homogène sur des étendues importantes. Ce procédé devrait avantageusement pouvoir être mis en oeuvre en mode continu, par exemple sur de longues bandes portant des revêtements électrochromes.

Le procédé mis au point par la Demanderesse permet de résoudre, avec des moyens simples et peu coûteux, l'ensemble de ces problèmes. Bien que le procédé proposé soit particulièrement utile pour la réduction de composés électrochromes déposés à l'état oxydé, on comprendra facilement à la lecture de la description ci-après qu'il peut s'adapter très facilement à l'oxydation de revêtements qui sont à l'état réduit et l'invention couvre par conséquent ces deux cas, la réduction d'un revêtement de composé électrochrome à l'état oxydé étant simplement un mode de réalisation préféré du procédé de l'invention.

Le principe de fonctionnement du procédé de la présente invention consiste essentiellement à remplacer les deux électrodes du dispositif de réduction électrolytique par une quantité suffisante d'un agent redox (agent réducteur ou agent oxydant) déposé sur une zone du substrat électroconducteur non couverte par le revêtement du composé électrochrome à réduire ou à oxyder. Lorsque l'ensemble formé par le revêtement de composé électrochrome, le substrat électroconducteur et l'agent rédox, est ensuite mise en contact avec un électrolyte liquide, une réaction d'oxydoréduction indirecte a lieu, via la couche conductrice sous-jacente, entre l'agent redox et le composé électrochrome déposés sur celle-ci. Le composé électrochrome, en contact avec la surface du substrat conducteur, est réduit ou oxydé et forme le composé électrochrome final.

La présente invention a par conséquent pour objet un procédé de fabrication d'un article électrochrome comprenant les étapes successives suivantes
(a) le dépôt d'une couche d'un composé électrochrome à la surface d'un substrat électroconducteur transparent ou translucide, ladite couche de composé électrochrome recouvrant seulement une partie de la surface dudit substrat électroconducteur et laissant libre au moins une autre partie de celui-ci,
(b) le dépôt d'un agent redox qui est un agent réducteur ou un agent oxydant du composé électrochrome, sur la partie de la surface du substrat électroconducteur non couverte par la couche de composé électrochrome,
(c) la mise en contact de la couche de composé électrochrome, déposée à l'étape (a), et de la couche d'agent rédox, déposée à l'étape (b), avec un électrolyte liquide pendant une durée suffisante pour permettre la réduction ou l'oxydation du composé électrochrome par l'agent rédox, et
(d) l'élimination de l'électrolyte par rinçage et/ou séchage.

Le composé déposé à l'étape. (a) peut en principe être n'importe quel composé électrochrome. Parmi les composés électrochromes connus, on préfère en particulier ceux pour lesquels un des deux états de coloration est un état sensiblement incolore.

On peut citer à titre d'exemples de tels composés électrochromes, les hexacyanométallates tels que les hexacyanoferrates de fer, de vanadium, de ruthénium, de cadmium, de chrome, de palladium ou de platine, le WO₃, le V₂O₅, et le NiO. On peut également utiliser des polymères électrochrome tels que le poly(3,4-éthylènedioxythiophène) (PEDOT) qui est essentiellement transparent et incolore à l'état oxydé et de couleur bleue à l'état réduit. Enfin, si les viologènes tels que les alkylviologènes, arylviologènes ou alkylarylviologènes ne conviennent pas très bien en tant que tels, leurs polymères, les polyviologènes, forment des couches électrochromes de bonne qualité.

La liste des colorants électrochromes ci-dessus n'a toutefois aucun caractère limitatif et le procédé de la présente invention pourra s'adapter en principe à n'importe quel composé électrochrome ne figurant pas dans cette liste, à condition qu'il présente une adhérence suffisante au substrat conducteur sous-jacent, qu'il soit insoluble dans l'électrolyte liquide et qu'on dispose d'un agent rédox approprié.

A l'étape (a) du procédé selon l'invention, le composé électrochrome est déposé sous forme d'un revêtement mince à la surface d'un substrat électroconducteur transparent. Ce dépôt pourra se faire selon des techniques connues telles que l'électrodéposition, le dépôt sol-gel, le dépôt chimique en phase vapeur (GVD, de l'anglais *chemical vapor deposition*), le dépôt physique en phase vapeur (PVD, de l'anglais *physical vapor deposition*), l'impression par jet d'encre, ou le dépôt non-électrolytique tel que décrit dans WO2009/156692.

L'épaisseur du revêtement électrochrome ne dépasse généralement pas une épaisseur de 10 micromètres et est de préférence comprise entre 100 et 1000 nm.

On connaît dans la technique un certain nombre de matériaux conducteurs transparents organiques ou minéraux. Les matériaux minéraux les plus largement utilisés sont les oxydes conducteurs transparents connus sous l'abréviation TCO (de l'anglais *transparent conductive oxides)* parmi lesquels on peut citer les dérivés de l'oxyde d'étain, de l'oxyde d'indium et de l'oxyde de zinc. On peut citer en particulier l'oxyde d'étain dopé au fluor (FTO, *fluor tin oxide),* l'oxyde d'indium dopé à l'étain (ITO, *indium tin oxide),* l'oxyde d'étain dopé à l'antimoine et l'oxyde de zinc dopé à l'aluminium. L'oxyde d'indium dopé à l'étain (ITO) est particulièrement préféré.

On peut également utiliser des polymères organiques électroconducteurs tels que les poly(acétylène), polypyrroles, polythiophènes, polyanilines, poly(p-phénylène sulfure), poly(p-phénylène vinylène). Un polymère électroconducteur transparent bien connu est le poly(3,4-éthylènedioxythiophène) (PEDOT).

Le substrat électroconducteur est généralement une couche électroconductrice transparente ou translucide formée sur un support non conducteur. Cette couche a alors de préférence une épaisseur comprise entre 50 nm et 10 000 nm, en particulier entre 100 et 600 nm.

Le support non conducteur est bien entendu de préférence également transparent ou translucide.

Il peut s'agir d'un substrat en verre minéral ou bien d'un matériau organique transparent, par exemple en poly(éthylène téréphtalate), polycarbonate, polyamide, polyimide, polysulfones, poly(méthacrylate de méthyle), copolymères d'éthylène téréphtalate et de carbonate, polyoléfines, notamment polynorbornènes, homopolymères et copolymères de diéthylèneglycol bis(allylcarbonate), homopolymères et copolymères (méth)acryliques, notamment les homopolymères et copolymères (méth)acryliques dérivés de bisphenol-A, homopolymères et copolymères thio(méth)acryliques, homopolymères et copolymères d'uréthane et de thiouréthane, homopolymères et copolymères époxyde et homopolymères et copolymères épisulfide.

Le support non conducteur peut en particulier être un matériau relativement flexible, par exemple un polymère, plastifié ou non, ayant de préférence une température de transition vitreuse supérieure à 60 °C, permettant le dépôt du composé électrochrome par impression rotative et la réduction ou l'oxydation en continu du matériau électrochrome selon le procédé de la présente invention.

Le composé électrochrome est déposé sur une partie de la surface du support électroconducteur seulement. Il est en effet essentiel de laisser libre une partie de la couche électroconductrice afin de pouvoir y déposer l'agent redox destiné à réduire ou oxyder le colorant électrochrome.

Le dépôt de la couche de colorant électrochrome peut bien entendu être mis en oeuvre avant ou après dépôt de l'agent redox. Autrement dit, l'ordre des étapes (a) et (b) du procédé selon l'invention peut être inversé et l'étape (b) peut précéder l'étape (a).

Comme indiqué en introduction, l'agent rédox est de préférence un agent réducteur. La nature de l'agent réducteur n'est pas déterminante pour la présente invention à condition que cet agent réducteur soit suffisamment insoluble dans l'électrolyte liquide pour ne pas être éliminé de la surface du substrat électroconducteur avant d'avoir rempli sa fonction consistant à réduire le colorant électrochrome. On peut citer à titre d'exemple d'agents réducteurs utilisables, le nickel (Ni), le molybdène (Mo), le cuivre (Cu), le cobalt (Co), l'indium (In), le fer (Fe), le zinc (Zn), le silicium (Si), l'argent (Ag), le titane (Ti), l'aluminium (Al), tous ces métaux étant de préférence à l'état métallique. On utilisera de préférence Cu, Ni, Ag, Ti et Al.

L'agent redox est de préférence déposé à proximité des bords de la couche de composé électrochrome, voire même en contact avec ceux-ci.

Ce dépôt peut revêtir la forme d'une ou plusieurs zones continues ou encore d'une multitude de points discrets.

L'étendue de la zone de la surface de la couche électroconductrice couverte par l'agent redox est relativement faible par rapport à celle de la surface du revêtement électrochrome. Elle représente de préférence moins de 20 %, en particulier moins de 10 % et de manière particulièrement préférée moins de 5 % de la surface du revêtement électrochrome.

La quantité d'agent redox à déposer dépend bien entendu de l'étendue mais également de l'épaisseur du revêtement électrochrome qu'il s'agit de réduire. L'agent réducteur fonctionne en effet comme un « réservoir » d'électrons disponibles, via le substrat électroconducteur, pour la réduction du colorant électrochrome. L'homme du métier saura déterminer sans problème la quantité nécessaire pour obtenir la réduction souhaitée du revêtement électrochrome.

Après accomplissement des étapes (a) et (b), le substrat portant, d'une part, le revêtement électrochrome et, d'autre part, l'agent redox est mis en contact avec l'électrolyte liquide, de préférence par immersion ou par pulvérisation avec l'électrolyte liquide.

L'électrolyte liquide peut être une solution aqueuse ou non aqueuse, contenant généralement mais pas systématiquement un sel. Les solvants non aqueux utilisés peuvent être des solvants organiques tels que le carbonate de propylène, le carbonate d'éthylène ou le diméthylsulfoxide, ou encore des liquides ioniques. On peut citer en tant que sels utilisables, par exemple le perchlorate de lithium, le perchlorate de tétrabutylammonium, et le chlorure de potassium.

La mise en contact avec l'électrolyte liquide peut se faire à température ambiante, c'est-à-dire à une température comprise entre 15 et 25 °C, ou bien à des températures plus élevées qui ne seront limitées en principe que par la dégradation thermique du système.

La durée de la mise en contact dépend d'un certain nombre de facteurs tels que la température de l'électrolyte, l'épaisseur de la couche électrochrome, la conductivité de la couche conductrice, l'étendue de la surface à réduire ainsi que la vitesse de la réaction redox. La Demanderesse a constaté que pour des épaisseurs de couche électrochrome telles qu'indiquées ci-dessus, une durée de mise en contact comprise entre 30 secondes et 15 minutes, de préférence entre 1 minute et 8 minutes, est généralement suffisante.

### Exemple

On dépose sur un support transparent en poly(éthylène téréphtalate) comportant un revêtement en d'oxyde d'indium dopé à l'étàin (ITO) d'une épaisseur de 250 nm, une couche mince de poly(3,4-éthylènedioxythiophène) (PEDOT) par élecrodéposition. Cette couche mince a la forme d'un carré (aire d'environ 4 cm²). Le long de chaque côté de ce carré on applique à proximité immédiate un ruban plastique plaqué de cuivre (3M 1245). L'ensemble est immergé dans une solution de perchlorate de tétrabutylammonium (TBAClO₄) dans du polycarbonate de propylène (1M). Le dépôt de PEDOT adopte progressivement une coloration bleue tandis que l'oxydation du cuivre se traduit par la coloration noire et la dissolution de l'agent réducteur. Au bout d'environ une minute, la coloration du dépôt électrochrome ne s'intensifie plus. L'article électrochrome est retiré de l'électrolyte liquide, rincé et séché.

## Revendications

1. Procédé de fabrication d'un article électrochrome comprenant les étapes successives suivantes
(a) le dépôt d'une couche d'un composé électrochrome à la surface d'un substrat électroconducteur transparent ou translucide, ladite couche de composé électrochrome recouvrant seulement une partie de la surface dudit substrat électroconducteur et laissant libre au moins une autre partie de celui-ci,
(b) le dépôt d'un agent redox qui est un agent réducteur ou un agent oxydant du composé électrochrome, sur la partie de la surface du substrat électroconducteur non couverte par la couche de composé électrochrome,
(c) la mise en contact de la couche de composé électrochrome, déposée à l'étape (a), et de la couche d'agent rédox, déposée à l'étape (b), avec un électrolyte liquide pendant une durée suffisante pour permettre la réduction ou l'oxydation du composé électrochrome par l'agent rédox, et
(d) l'élimination de l'électrolyte par rinçage et/ou séchage.

2. Procédé de fabrication d'un article électrochrome comprenant les étapes successives suivantes :
(a) le dépôt d'une couche d'agent redox qui est un agent réducteur ou un agent oxydant d'un composé électrochrome à la surface d'un substrat électroconducteur transparent ou translucide, ladite couche d'agent redox recouvrant seulement une partie de la surface dudit substrat électroconducteur et laissant libre au moins une autre partie de celui-ci,
(b) le dépôt d'une couche du composé électrochrome, sur la partie de la surface du substrat electroconducteur non couverte par ladite couche d'agent redox ,
(c) la mise en contact de la couche de composé électrochrome, déposée à l'étape (b), et de la couche d'agent rédox, déposée à l'étape (a), avec un électrolyte liquide pendant une durée suffisante pour permettre la réduction ou l'oxydation du composé électrochrome par l'agent rédox, et
(d) l'élimination de l'électrolyte par rinçage et/ou séchage.

3. Procédé selon la revendication 1 ou 2, **caractérisé par le fait que** l'agent redox est un agent réducteur du composé électrochrome.

4. Procédé selon l'une quelconque des revendications précédentes, **caractérisé par le fait que** le substrat électroconducteur est constitué d'oxyde d'indium dopé à l'étain (ITO), d'oxyde d'étain dopé au fluor (FTO) ou de polymères organiques conducteurs.

5. Procédé selon l'une quelconque des revendications précédentes, **caractérisé par le fait que** l'agent réducteur est choisi dans le groupe formé par Ni, Mo, Cu, Co, In, Fe, Zn, Si, Ag, Ti, Al, de préférence parmi Cu, Ni, Ag, Ti et Al, tous ces métaux étant à l'état métallique.

6. Procédé selon l'une quelconque des revendications précédentes, **caractérisé par le fait que** le composé électrochrome est choisi parmi les hexacyanométallates, le WO₃, le V₂O₅, le NiO, et les polymères électrochromes.

7. Procédé selon l'une quelconque des revendications précédentes, **caractérisé par le fait que** l'agent redox est déposé de manière à être en contact avec les bords de la couche de composé électrochrome ou à proximité de ceux-ci.

8. Procédé selon l'une quelconque des revendications précédentes, **caractérisé par le fait que** l'agent rédox est déposé en une ou plusieurs zones continues ou en une multitude de points discrets.

9. Procédé selon l'une quelconque des revendications précédentes, **caractérisé par le fait que** la mise en contact à l'étape (c) se fait par immersion dans l'électrolyte liquide ou par pulvérisation de l'électrolyte liquide.

10. Procédé selon l'une quelconque des revendications précédentes, **caractérisé par le fait que** la durée de mise en contact, à l'étape (c), est comprise entre 30 secondes et 15 minutes, de préférence entre 1 minute et 8 minutes.

## Patentansprüche

1. Verfahren zur Herstellung eines elektrochromen Artikels, das folgende Schritte umfasst:
(a) Abscheiden einer Schicht aus einer elektrochromen Verbindung auf der Oberfläche eines transparenten oder durchscheinenden elektrisch leitfähigen Substrats, wobei die Schicht aus elektrochromer Verbindung nur einen Teil der Oberfläche des elektrisch leitfähigen Substrats bedeckt und mindestens einen anderen Teil davon frei lässt;
(b) Abscheiden eines Redoxmittels, bei dem es sich um ein Reduktionsmittel oder ein Oxidationsmittel für die elektrochrome Verbindung handelt, auf dem Teil der Oberfläche des elektrisch leitfähigen Substrats, der nicht durch die Schicht aus elektrochromer Verbindung bedeckt ist;
(c) Inberührungbringen der in Schritt (a) abgeschiedenen Schicht aus elektrochromer Verbindung und der in Schritt (b) abgeschiedenen Schicht aus Redoxmittel mit einem flüssigen Elektrolyten über einen für die Reduktion oder Oxidation der elektrochromen Verbindung durch das Redoxmittel ausreichenden Zeitraum; und
(d) Entfernen des Elektrolyten durch Spülen und/oder Trocknen.

2. Verfahren zur Herstellung eines elektrochromen Artikels, das folgende Schritte umfasst:
(a) Abscheiden einer Schicht aus Redoxmittel, bei dem es sich um ein Reduktionsmittel oder ein Oxidationsmittel für eine elektrochrome Verbindung handelt, auf der Oberfläche eines transparenten oder durchscheinenden elektrisch leitfähigen Substrats, wobei die Schicht aus Redoxmittel nur einen Teil der Oberfläche des elektrisch leitfähigen Substrats bedeckt und mindestens einen anderen Teil davon frei lässt;
b) Abscheiden einer Schicht aus der elektrochromen Verbindung auf dem Teil der Oberfläche des elektrisch leitfähigen Substrats, der nicht durch die Schicht aus Redoxmittel bedeckt ist;
(c) Inberührungbringen der in Schritt (b) abgeschiedenen Schicht aus elektrochromer Verbindung und der in Schritt (a) abgeschiedenen Schicht aus Redoxmittel mit einem flüssigen Elektrolyten über einen für die Reduktion oder Oxidation der elektrochromen Verbindung durch das Redoxmittel ausreichenden Zeitraum; und
(d) Entfernen des Elektrolyten durch Spülen und/oder Trocknen.

3. Verfahren nach Anspruch 1 oder 2, **dadurch gekennzeichnet, dass** es sich bei dem Redoxmittel um ein Reduktionsmittel für die elektrochrome Verbindung handelt.

4. Verfahren nach einem der vorhergehenden Ansprüche, **dadurch gekennzeichnet, dass** das elektrisch leitfähige Substrat aus zinndotiertem Indiumoxid (ITO), zinndotiertem Fluoroxid (FTO) oder leitfähigen organischen Polymeren besteht.

5. Verfahren nach einem der vorhergehenden Ansprüche, **dadurch gekennzeichnet, dass** man das Reduktionsmittel aus der Gruppe bestehend aus Ni, Mo, Cu, Co, In, Fe, Zn, Si, Ag, Ti und Al und vorzugsweise aus Cu, Ni, Ag, Ti und Al auswählt, wobei alle diese Metalle in metallischem Zustand vorliegen.

6. Verfahren nach einem der vorhergehenden Ansprüche, **dadurch gekennzeichnet, dass** man die elektrochrome Verbindung aus Hexacyanometallaten, WO₃, V₂O₅, NiO und elektrochromen Polymeren auswählt.

7. Verfahren nach einem der vorhergehenden Ansprüche, **dadurch gekennzeichnet, dass** man das Redoxmittel so aufbringt, dass es mit den Rändern der Schicht aus elektrochromer Verbindung in Berührung kommt oder sich in deren Nähe befindet.

8. Verfahren nach einem der vorhergehenden Ansprüche, **dadurch gekennzeichnet, dass** man das Redoxmittel in einer oder mehreren kontinuierlichen Zonen oder in einer Vielzahl diskreter Punkte abscheidet.

9. Verfahren nach einem der vorhergehenden Ansprüche, **dadurch gekennzeichnet, dass** das Inberührungbringen in Schritt (c) durch Eintauchen in den flüssigen Elektrolyten oder durch Aufsprühen des flüssigen Elektrolyten erfolgt.

10. Verfahren nach einem der vorhergehenden Ansprüche, **dadurch gekennzeichnet, dass** der Zeitraum des Inberührungbringens in Schritt (c) zwischen 30 Sekunden und 15 Minuten, vorzugsweise zwischen 1 Minute und 8 Minuten, liegt.

## Claims

1. Process for manufacturing an electrochromic article comprising the following steps in succession:
(a) depositing a layer of an electrochromic compound on the surface of a transparent or translucent electrically conductive substrate, said layer of electrochromic compound covering only one portion of the surface of said electrically conductive substrate and leaving at least one other portion of the latter free;
(b) depositing a redox agent that is either a reducing agent or an oxidising agent of the electrochromic compound on the portion of the surface of the electrically conductive substrate not covered by the layer of electrochromic compound;
(c) bringing the layer of electrochromic compound deposited in step (a) and the layer of redox agent deposited in step (b) into contact with a liquid electrolyte for enough time to allow the electrochromic compound to be reduced or oxidised by the redox agent; and
(d) removing the electrolyte by rinsing and/or drying.

2. Process for manufacturing an electrochromic article comprising the following steps in succession:
(a) depositing a layer of a redox agent that is either a reducing agent or an oxidising agent of an electrochromic compound on the surface of a transparent or translucent electrically conductive substrate, said layer of redox agent covering only one portion of the surface of said electrically conductive substrate and leaving at least one other portion of the latter free;
(b) depositing a layer of the electrochromic compound on the portion of the surface of the electrically conductive substrate not covered by said layer of redox agent;
(c) bringing the layer of electrochromic compound deposited in step (b) and the layer of redox agent deposited in step (a) into contact with a liquid electrolyte for enough time to allow the electrochromic compound to be reduced or oxidised by the redox agent; and
(d) removing the electrolyte by rinsing and/or drying.

3. Process according to Claim 1 or 2, **characterised in that** the redox agent is a reducing agent of the electrochromic compound.

4. Process according to any one of the preceding claims, **characterised in that** the electrically conductive substrate is made of indium tin oxide (ITO), tin-doped fluorine oxide (FTO) or conductive organic polymers.

5. Process according to any one of the preceding claims, **characterised in that** the reducing agent is chosen from the group formed of Ni, Mo, Cu, Co, In, Fe, Zn, Si, Ag, Ti and Al and preferably from Cu, Ni, Ag, Ti and Al, all these metals being in the metal state.

6. Process according to any one of the preceding claims, **characterised in that** the electrochromic compound is chosen from hexacyanometallates, WO₃, V₂O₅, NiO and electrochromic polymers.

7. Process according to any one of preceding claims, **characterised in that** the redox agent is deposited so as to make contact with the edges of the layer of electrochromic compound or in proximity to said edges.

8. Process according to any one of the preceding claims, **characterised in that** the redox agent is deposited on one or more continuous zones or on a multitude of discrete points.

9. Process according to any one of the preceding claims, **characterised in that** the contact in step (c) is achieved by immersion in the liquid electrolyte or by spraying the liquid electrolyte.

10. Process according to any one of the preceding claims, **characterised in that** the length of the contact, in step (c), is comprised between 30 seconds and 15 minutes and preferably between 1 minute and 8 minutes.
